# EUROPEAN PATENT APPLICATION

(11) **EP 2 677 130 A1**
(43) Date of publication of application: **25.12.2013**
(21) Application number: 12290199.4
(22) Date of filing: 19.06.2012
(51) Int. Cl.: F01M 13/00, F02M 25/06, F02M 35/10

(54) **Air intake system of a turbocharged internal combustion engine**

(71) Applicant: MANN+HUMMEL GmbH, 71638 Ludwigsburg (DE)
(72) Inventor: Gurvan, Nabucet, 72000 Le Mans (FR)

(57) **Abstract**

The present invention relates to air intake system (10) of a turbocharged internal combustion engine (16) in particular of a motor vehicle. The air intake system (10) has an inlet air duct (20), which leads to an air inlet (24) of a compressor (26) of a turbocharger (12) of the internal combustion engine (16). A charge air duct (34) for charge air is in terms of a charge air flow (36) arranged between an air outlet (30) of the compressor (26) and an air intake manifold (32) of the internal combustion engine (16). A closed crankcase ventilation system (14) with a venting pipe (48) for blow-by gas, which is in terms of the blow-by gas flow (52) arranged between a crankcase (50) of the internal combustion engine (16) and the inlet air duct (20), has means for heating up at least a section (56) of the venting pipe (48). At least one heat transfer section (54) of the charge air duct (34) is in thermal contact with at least one heat transfer section (56) of the venting pipe (48).

## Description

### Technical Field

The present invention relates to an air intake system of a turbocharged internal combustion engine in particular of a motor vehicle, having an inlet air duct, which leads to an air inlet of a compressor of a turbocharger of the internal combustion engine, and having a charge air duct for charge air, which is in terms of a charge air flow arranged between an air outlet of the compressor and an air intake manifold of the internal combustion engine, whereby a closed crankcase ventilation system with a venting pipe for blow-by gas, which is in terms of the blow-by gas flow arranged between a crankcase of the internal combustion engine and the inlet air duct, having means for heating up at least a section of the venting pipe.

### State of Technology

A turbocharged internal combustion engine known from the market has an air intake system for supplying the engine with charge air. An inlet air duct for intake air leads to an air inlet of a compressor of a turbocharger. With the compressor the intake air is compressed and heated up. The compressed intake air is called charge air. From an air outlet of the compressor a charge air duct for the charge air leads to an air intake manifold. Within the charge air duct an intercooler for cooling down the charge air is arranged. The air intake manifold leads the charge air to cylinders of the engine. Further the internal combustion engine has a closed crankcase ventilation system with a venting pipe for blow-by gas. The venting pipe leads from a crankcase of the internal combustion engine to the inlet air duct. A heater for heating up the venting pipe is arranged in the venting pipe.

It is an object of the invention to provide an air intake system of the above-mentioned kind, with which a heating of the venting pipe and/or the blow-by gas can be simplified. Especially the function of the internal combustion engine during cold run should be guaranteed and its operating characteristics should be improved.

### Disclosure of Invention

The object is achieved by that at least one heat transfer section of the charge air duct is in thermal contact with at least one heat transfer section of the venting pipe.

According to the invention, a heat transfer between the heat transfer sections of the charge air duct and the venting pipe takes place. So thermal energy of the compressed and heated charge air in the charge air duct can be transferred to the venting pipe. Shortly after a cold start of the internal combustion engine, the compressor of the turbocharger heats up the charge air. The heated charge air warms up the at least one heat transfer section of the charge air duct. Due to the thermal contact, the at least one heat transfer section of the charge air duct warms up the at least one heat transfer section of the venting pipe. In this way, the venting pipe can be warmed up. Further, the blow-by gas in the venting pipe can be warmed up. So, a condensation of water, which may be entrained with the blow-by gas, at the interior surface of the venting pipe can be reduced. Further, a freeze-off of the venting pipe can be avoided. A separate heater in the closed crankcase ventilation system, in particular in the venting pipe, is not necessary. At least, a heating energy of an existing heater can be reduced. Due to the heat transfer, the hot charge air in the charge air duct can cool down accordingly. So the cooling down of the charge air before being supplied to the air intake manifold can be improved. A necessary cooling capacity of a possible intercooler for cooling down the hot charge air can be reduced accordingly. Favorably, the intercooler can be placed in the charge air duct. The at least one heat transfer section of the charge air duct can act also as a kind of intercooler. The heat transfer section can be designed as a kind of intercooler. Favorably, the at least one heat transfer section can be a part of a possible intercooler. Favorably, the heat transfer section of the charge air duct and the heat transfer section of the venting pipe can be one piece. The heat transfer sections also can be separate parts, which can be connected in particular by gluing, welding or in a mechanical way. Favorably, the charge air duct can be pressure resistant. Thus, the charge air duct can stand even high pressures, which may be generated by the compressor of the turbocharger. In particular, the charge air duct can be heat resistant. Favorably, an air cleaner can be arranged within the inlet air duct. So the intake air can be cleaned before it reaches the compressor.

According to a favourable embodiment of the invention, at least one thermal contact area of the heat transfer sections of the charge air duct and the venting pipe can extend in flow direction of the blow-by gas in the heat transfer section of the venting pipe and/or the charge air in the heat transfer section of the charge air duct. So the heat exchange between the heat transfer sections can be further improved.

According to a further favourable embodiment of the invention, the at least one heat transfer section of the charge air duct and/or at least one heat transfer section of the venting pipe can be straight. So the heat transfer sections easy can be arranged parallel. So, the dimension of the at least one other contact area can be increased. The heat transfer sections also can be curved. The heat transfer sections also can be twisted.

Advantageously, a flow direction of the blow-by gas in the heat transfer section of the venting pipe can be opposite to a flow direction of the charge air in the heat transfer section of the charge air duct. Thus, a top-down principle can be applied for the heat transfer between the charge air in the charge air duct and the blow-by gas in the venting pipe. So the efficiency of the heat transfer can be further improved.

Favorably, the heat transfer section of the charge air duct can be arranged in flow direction of the charge air between the air outlet of the compressor and an intercooler of the turbocharger. Downstream of the heat transfer section, the pre-cooled charge air can pass through the intercooler. In the intercooler the temperature of the charge air can be further reduced. The efficiency of the warming up of the at least one heat transfer section of the venting pipe is not influenced by the intercooler.

Advantageously, the venting pipe can end in the inlet air duct in flow direction the intake air between an air cleaner of the air intake system and the air inlet of the compressor. In this way, the blow-by gas can be mixed with clean intake air.

### Brief Description of Drawings

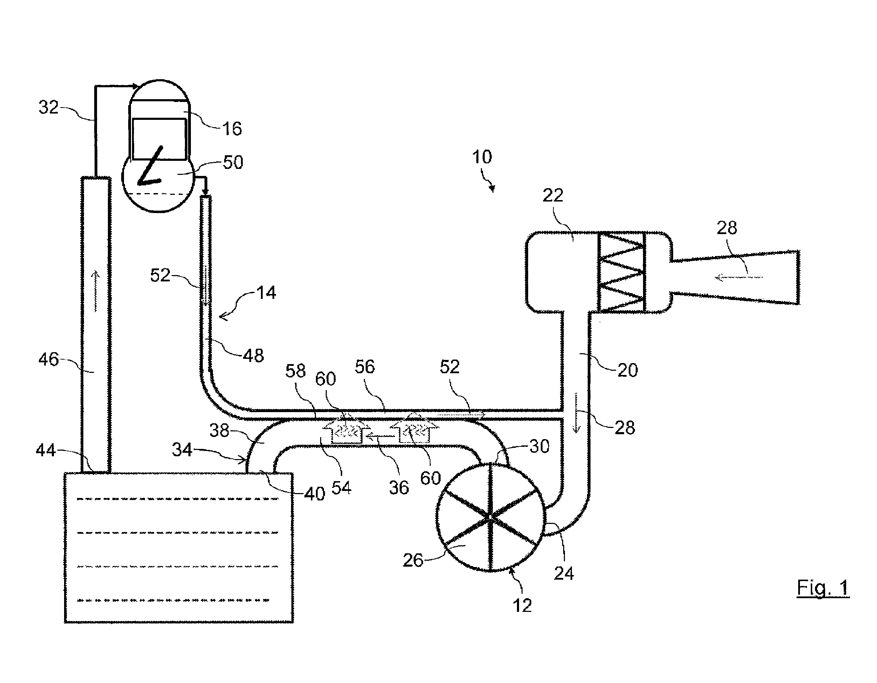

The present invention together with the above-mentioned and other objects and advantages may best be understood from the following detailed description of the embodiments, but not restricted to the embodiments, wherein is shown schematically in the sole
- Figure 1: an air intake system, a turbocharger and a closed crankcase ventilation system of an internal combustion engine in part.

In the drawings, equal or similar elements are referred to by equal reference numerals. The drawings are merely schematic representations, not intended to portray specific parameters of the invention. Moreover, the drawings are intended to depict only typical embodiments of the invention and therefore should not be considered as limiting the scope of the invention.

### Embodiment(s) of Invention

In figure 1 an air intake system 10, a turbocharger 12 and a closed crankcase ventilation system 14 of a turbocharged internal combustion engine 16 of a motor vehicle is depicted in part.

The air intake system 10 supplies cylinders 18 of the internal combustion engine 16 with charge air. The air intake system 10 has an inlet air duct 20, which leads from an air cleaner 22 to an air inlet 24 of a compressor 26 of the turbocharger 12. With the inlet air duct 20, ambient air can be sucked in. A flow direction of the intake air is indicated in figure 1 with arrows 28.

The compressor 26 is drivable connected with a turbine of the turbocharger 12. As is known, the turbine is driven by exhaust gases of the internal combustion engine 16. For the sake of clarity, the turbine and an exhaust system of the internal combustion engine 16 are not shown in the figure 1. The intake air is compressed with the compressor 26. Thereby the intake air can also be heated up- The compressed intake air is called charge air.

A charge air duct 34 for the charge air is in terms of the charge air flow arranged between an air outlet 30 of the compressor 26 and an air intake manifold 32 of the internal combustion engine 16. For the sake of clarity, the air intake manifold 32 is indicated with a simple arrow. A flow direction 36 of the charge air is indicated in figure 1 with an arrow 36. The charge air duct 34 is pressure resistant, so it can stand even high pressures, which can be generated by the compressor 26. Further, the charge air duct 34 is heat resistant. The charge air duct 34 consists of several parts. From the air outlet 30 of the compressor 26 a first duct part 38 of the charge air duct 34 leads to an inlet 40 of an intercooler 42 for cooling down the charge air. From an outlet 44 of the intercooler 42 a second duct part 46 of the charge air duct 34 leads to the air intake manifold 32. The intercooler 42 therefore is arranged within the charge air duct 34. The air intake manifold 32 leads the charge air to the cylinders 18 of the internal combustion engine 16.

The crankcase ventilation system 14 has a venting pipe 48 for blow-by gas. The venting pipe 48 leads from a crankcase 50 of the internal combustion engine 16 to the inlet air duct 20. In terms of a flow direction 52 of the blow-by gas, the venting pipe 48 is arranged between the crankcase 50 and the inlet air duct 20. In figure 1, the flow direction 52 of the blow-by gas is indicated with arrows. The venting pipe 48 ends in the inlet air duct 20 in flow direction 28 of the intake air between the air cleaner 22 and the air inlet 24 of the compressor 26. The blow-by gas so can be mixed with the clean intake air.

The first duct part 38 of the charge air duct 34 has a straight heat transfer section 54. The heat transfer section 54 of the charge air duct 34 is arranged in flow direction 36 of the charge air between the air outlet 30 of the compressor 26 and inlet 40 of the intercooler 42. Also the venting pipe 48 has a straight heat transfer section 56. The two heat transfer sections 52 and 56 run parallel. The heat transfer section 54 of the charge air duct 34 is in thermal contact with the heat transfer section 56 of the venting pipe 48 for heating up the heat transfer section 56 of the venting pipe 48. A thermal contact area 58 of the two heat transfer sections 54 and 56 extends in flow direction 52 of the blow-by gas in the heat transfer section 56 of the venting pipe 48 and the charge air in the heat transfer section 54 the charge air duct 34. The heat transfer section 54 of the charge air duct 34 and the heat transfer section 54 of the venting pipe 48 can be one piece. The heat transfer sections also can be separate parts, which can be connected in particular by gluing, welding or in a mechanical way. The flow direction 52 of the blow-by gas in the heat transfer section 56 of the venting pipe 48 is opposite to the flow direction 36 of the charge air in the heat transfer section 54 of the charge air duct 34. A top-down principle therefore is applied for the heat transfer between the charge air and the blow-by gas.

In a operation state of the internal combustion engine 16, ambient air is sucked through the air cleaner 22 into the inlet air duct 20, In the inlet air duct 20, the inlet air is mixed with the blow-by gas, which is coming from the venting pipe 48. This blow-by gaslinlet air mixture gets through the air inlet 24 of the compressor 26 into the compressor 26. The compressor 26 compresses the air mixture- Shortly after a cold start of the internal combustion engine 16, the compressor 26 additionally heats up the air mixture. The hot charge air passes through the air outlet 30 of the compressor 26 into the first duct part 38 of the charge air duct 34. The hot charge air warms up the heat transfer section 54 of the charge air duct 34. Due to the thermal contact, the heat transfer section 54 of the charge air duct 34 warms up the heat transfer section 56 of the venting pipe 48. Further, the blow-by gas in the venting pipe 48 is warmed up by the heat transfer section 56. All in all, a heat transfer between the heat transfer sections 54 and 56 of the charge air duct 34 and the venting pipe 48 takes place. The heat transfer is indicated in figure 1 with two arrows 60. Thermal energy of the hot charge air is transferred to the venting pipe 48, with the result that a condensation of water, which can be entrained with the blow-by gas, at the interior surface of the venting pipe 48 can be reduced. Further a freeze-off of the venting pipe 48 can be avoided.

Due to the heat transfer 60, the hot charge air in the charge air duct 34 cools down accordingly. Downstream from the heat transfer section 54, the pre-cooled charge air passes through the intercooler 42. With the intercooler 42 the temperature of the charge air is further reduced. The efficiency of the warming up of the heat transfer section 56 of the venting pipe 48 is not influenced by the intercooler 42. The chilled charge air leaves the intercooler 42 through the outlet 44 and gets into the second duct part 46 of the charge air duct 34. With the second duct part 46 the chilled charge air is led into the air intake manifold 32. From the air intake manifold 32 the charge air is supplied to the cylinders 18. The exhaust of the internal combustion engine 16 is led to the exhaust system. The exhaust thereby drives the turbine of the turbocharger 12. The turbine drives the compressor 26.

During the operation of the internal combustion engine 16, blow-by gas gets from the crankcase 50 to the crankcase ventilation system 14. The blow-by gas passes the venting pipe 48 and gets into the inlet air duct 20. In the inlet air duct 20 the blow-by gas is mixed with the clean intake air, as mentioned above.

The invention is not limited to an air intake system 10 of an internal combustion engine 16 of a motor vehicle. The invention can also be applied to other kinds of internal combustion engines 16, for example industrial engines.

Also more than one heat transfer section 54 of the charge air duct 34 can be in thermal contact with accordant heat transfer sections 56 of the venting pipe 48.

The heat transfer section 56 of the venting pipe 48 can be in thermal contact with the rest of the venting pipe 48, so that further sections of the venting pipe 48 can be heated up by the charge air duct 34.

Additionally, the at least one separate heater can be arranged in the crankcase ventilation system 14, for example in the venting pipe 48. Due to the heat transfer 60 between the charge air duct 34 and the venting pipe 48, the heating energy of such a heater can be reduced accordingly.

The heat transfer section 54 can be an integrated part of the intercooler 42.

The heat transfer section 54 of the charge air duct 34 can also act as a kind of intercooler. It can be designed as a kind of intercooler. It can replace the intercooler 42. The air intake system 10 can be realized without a separate intercooler 42.

Instead of being straight, the heat transfer sections 54 and/or 56 also can be curved. The heat transfer sections 54 and 56 also can be twisted.

The flow direction 52 of the blow-by gas in the heat transfer section 56 of the venting pipe 48 can also be parallel to the flow direction 36 of the charge air in the heat transfer section 54 of the charge air duct 34. The flow direction 52 of the blow-by gas instead can be diagonal to the flow direction 36 of the charge air.

The crankcase ventilation system 14 also can comprise other components, such as valves, filters and/or oil separators. Such components can be arranged upstream and/or downstream of the venting pipe 48 and/or within the venting pipe 48.

## Claims

1. Air intake system (10) of a turbocharged internal combustion engine (16) in particular of a motor vehicle, having an inlet air duct (20), which leads to an air inlet (24) of a compressor (26) of a turbocharger (12) of the internal combustion engine (16), having a charge air duct (34) for charge air, which is in terms of a charge air flow (36) arranged between an air outlet (30) of the compressor (26) and an air intake manifold (32) of the internal combustion engine (16), whereby a closed crankcase ventilation system (14) with a venting pipe (48) for blow-by gas, which is in terms of the blow-by gas flow (52) arranged between a crankcase (50) of the internal combustion engine (16) and the inlet air duct (20), having means for heating up at least a section (56) of the venting pipe (48), **characterized in that**, at least one heat transfer section (54) of the charge air duct (34) is in thermal contact with at least one heat transfer section (56) of the venting pipe (48).

2. Air intake system according to claim 1, **characterized in that**, at least one thermal contact area (58) between the heat transfer sections (54, 56) of the charge air duct (34) and the venting pipe (48) extends in flow direction (52) of the blow-by gas in the heat transfer section (56) of the venting pipe (48) and/or the charge air in the heat transfer section (54) of the charge air duct (34).

3. Air intake system according to claim 1 or 2, **characterized in that**, the at least one heat transfer section (54) of the charge air duct (34) and/or at least one heat transfer section (56) of the venting pipe (48) is straight.

4. Air intake system according to one of the previous claims, **characterized in that**, a flow direction (52) of the blow-by gas in the heat transfer section (56) of the venting pipe (48) is opposite to a flow direction (36) of the charge air in the heat transfer section (54) of the charge air duct (34).

5. Air intake system according to one of the previous claims, **characterized in that**, the heat transfer section (54) of the charge air duct (34) is arranged in flow direction 36 of the charge air between the air outlet (30) of the compressor (26) and an intercooler (42) of the turbocharger (12).

6. Air intake system according to one of the previous claims, **characterized in that**, the venting pipe (48) ends in the inlet air duct (20) in flow direction (28) of the intake air between an air cleaner (22) of the air intake system and the air inlet (24) of the compressor (26).
